# EUROPÄISCHE PATENTANMELDUNG

(11) **EP 1 273 902 A2**
(43) Veröffentlichungstag der Anmeldung: **08.01.2003**
(21) Anmeldenummer: 02014716.1
(22) Anmeldetag: 03.07.2002
(51) Int. Cl.: G01N 15/08

(54) **Gerät und Verfahren zur Messung der Gasdurchlässigkeit eines porösen Baustoffs**

(30) Priorität: 03.07.2001 DE 10131752
(71) Anmelder: Technische Universität, 38106 Braunschweig (DE)
(72) Erfinder: Bruder, Stephan, 38154 Königslutter am Elm (DE)
(74) Vertreter: Einsel, Martin

(57) **Zusammenfassung**

Eine Anordnung und ein Verfahren zur Messung der Gasdurchlässigkeit eines porösen Baustoffes (12) in einem Baukörper (10) mit einer Oberfläche (11) sehen jeweils vor, dass ein abgeschlossener Hohlraum (20) im Inneren des Baukörpers (10) mit Abstand zur Oberfläche (11) des Baustoffes (12) vorgesehen wird. Sowohl in dem Hohlraum (20) als auch in der Umgebung (30) außerhalb des Baukörpers (10) sind jeweils ein Luftdrucksensor (42, 43) angeordnet. Die Daten der beiden Luftdrucksensoren (42, 43) werden an eine Auswerteeinheit (45) gegeben. Der veränderliche Luftdruck in der Umgebung (30) zieht mit zeitlicher Verzögerung einen entsprechenden Druckverlauf im Hohlraum (20) nach sich, es kommt also zu einer verzögerten Anpassung an den atmosphärischen Außendruck. Aus den zeitlichen Verlaufskurven kann auf die Porösität des Baustoffes (12) zwischen dem Hohlraum (20) und der Umgebung (30) geschlossen werden.

## Beschreibung

Die Erfindung betrifft ein Verfahren und eine Anordnung zur Messung der Gasdurchlässigkeit eines porösen Baustoffes in einem Baukörper mit einer Oberfläche, die den porösen Baustoff von der Umgebung abgrenzt.

Die Gasdurchlässigkeit poröser Baustoffe ist in mehrfacher Hinsicht interessant. So gibt sie einen Hinweis auf den aktuellen Zustand eines aus diesem Baustoff bestehenden Baukörpers, lässt Rückschlüsse auf möglicherweise alterungsoder belastungsbedingt entstandene Risse oder Zersetzungsprozesse zu, gibt einen Anhaltspunkt für eingedrungene Fremdsubstanzen, beispielsweise Wasser oder Feuchtigkeit, oder auch durch chemische Langzeitreaktionen aufgetretene Verklebungen der Porositäten. Die Gasdurchlässigkeit eines Baustoffes ist daher ein wesentliches Merkmal für die Qualität und Dauerhaftigkeit sowie den Zustand von Baukörpern.

Insbesondere bei bestimmten Bauwerken wird in bestimmten Abständen oder bei vermuteten Schäden die Gasdurchlässigkeit geprüft. Naheliegenderweise ist es zum Beispiel bei Brücken oder anderen tragenden Teilen recht wichtig, festzustellen, ob durch eingetretene Zustandsänderungen vielleicht die Tragfähigkeit beeinträchtigt ist.

Aufgrund der Wichtigkeit dieser regelmäßig oder in Abständen durchgeführten Überprüfungen sind bereits verschiedene Verfahren für die Messung der Gasdurchlässigkeit entwickelt worden, die beispielsweise auch von der Bundesanstalt für Materialforschung und Prüfung (BAM) in einem Kompendium dargestellt werden. Ein Beispiel dafür ist das Torrent-Verfahren. Bisher wurde die Gasdurchlässigkeit entweder oberflächennah am Baukörper ermittelt oder es wurden Proben im Labor untersucht.

Bei diesen und anderen bekannten Verfahren wird ein Überdruck oder Unterdruck künstlich aufgebracht. Der durch den porösen Baustoff hindurch eintretende Druckausgleich oder der resultierende Druck wird dann als Maß für die Gasdurchlässigkeit des Baustoffes ausgewertet. Soll eine Gasdurchlässigkeitsprüfung auch in tieferliegenden Schichten des Bauwerkes vorgenommen werden, ist es erforderlich, Bohrkerne zu ziehen und dann Scheiben dieser Bohrkerne im Labor zu testen.

Ein Beispiel für eine Messeinrichtung zur Bestimmung der Porosität mit einem derartigen Verfahren ist in der DE 41 06 923 A1 angegeben, bei dem eine Flüssigkeit in den zu prüfenden Baustoff injiziert wird.

Nachteilig an diesem Verfahren ist unter anderem, dass die jeweiligen Messungen beispielsweise auch an ungünstig gelegenen Teilen eines Bauwerkes vorgenommen werden müssen, beispielweise bei Brücken leicht vorstellbar. Das Ziehen von Baukernen führt zu einer Schädigung der Bauwerke und ist daher nicht oder jedenfalls nicht unbegrenzt möglich. Das Durchführen der einzelnen Prüfungen ist auch recht kostenaufwendig, was dazu führt, dass man schon aus diesem Grunde versuchen muss, die Abstände zwischen den einzelnen Prüfungen möglichst groß zu halten. Das führt natürlich dazu, dass sich Veränderungen bereits in größerem Maßstab eingestellt haben können, wenn die nächste Messung durchgeführt wird, so dass vielleicht bereits irreparable Schäden eingetreten sind.

Aufgabe der Erfindung ist es demgegenüber, ein Verfahren und eine Anordnung vorzuschlagen, bei der die Messung der Gasdurchlässigkeit eines porösen Baustoffes mit geringerem Aufwand möglich ist.

Diese Aufgabe wird bei einer Anordnung dadurch gelöst, dass ein abgeschlossener Hohlraum in Inneren des Baukörpers mit Abstand zur Oberfläche des Baustoffes vorgesehen ist, dass ein Luftdrucksensor in dem Hohlraum angeordnet ist, dass ein Luftdrucksensor in der Umgebung außerhalb des Baukörpers angeordnet ist, und dass eine Auswerteeinheit vorgesehen ist, die eine mindestens zeitweise Datenverbindung mit den beiden Luftdrucksensoren aufweist.

Diese Aufgabe wird bei einem Verfahren dadurch gelöst, dass im Inneren des Baukörpers ein abgeschlossener Hohlraum ausgebildet wird, der gegenüber der Umgebung abgeschlossen wird, dass in dem Hohlraum der Luftdruck gemessen wird, dass in der Umgebung der Luftdruck gemessen wird, dass die Messwerte für den Luftdruck im Hohlraum und in der Umgebung kontinuierlich oder in diskreten Zeitabständen an eine Auswerteeinheit gegeben werden, und dass die Auswerteeinheit aus den veränderlichen Luftdruckwerten in der Umgebung und den davon abhängigen veränderlichen Luftdruckwerten im Hohlraum auf die Gasdurchlässigkeit des porösen Baustoffes schließen.

Mit der Erfindung wird überraschend die Aufgabe gelöst. Darüber hinaus wird erstmals eine kontinuierliche Überwachung der Veränderung der Gasdurchlässigkeit möglich, ein sogenanntes Monitoring. Bei kontinuierlichen oder auch regelmäßigen Messungen des Innendrucks und des Außendrucks kann aus den sich ergebenden Zeitverläufen sehr rasch festgestellt werden, ob sich Veränderungen in der Gasdurchlässigkeit ergeben. Dabei wird nämlich die natürliche Atmosphärische Luftdruckveränderung zur Bestimmung ausgenutzt. Es ist nicht mehr notwendig, wie bisher üblich, Unterdruckpumpen oder Kompressoren einzusetzen, um künstlich einen Differenzdruck zu erzeugen und diesen auszugleichen und aus dem Ausgleichsvorgang Rückschlüsse zu ziehen.

Die Erfindung basiert stattdessen darauf, dass bei einer Luftdruckveränderung in der Atmosphäre der in dem Baukörper vorgesehene Hohlraum mit einer gewissen zeitlichen Verzögerung genau diese Luftdruckveränderung nachvollzieht. Steigt der atmosphärische Luftdruck, wird nach einem genau definierbaren Zeitraum auch der Luftdruck in dem Hohlraum angestiegen sein. Die Abhängigkeit zwischen dem Verlauf des atmosphärischen Außendrucks und dem Verlauf des Innendrucks ist das Maß für die Gasdurchlässigkeit des porösen Baustoffes.

Dabei muss nicht nur auf die Zeitverzögerung zurückgegriffen werden, obwohl sich diese natürlich ebenfalls für eine Auswertung anbietet. Auch aus den Gradienten der Druckverlaufskurven lassen sich nämlich Rückschlüsse ziehen, ebenso aus Vergleichen einer Kurve mit den Gradienten der anderen.

Dies ist von besonderem Vorteil, um problemlos witterungsbedingte Einflüsse eliminieren zu können, so beispielsweise einen während des Ausgleichsvorgangs zusätzlich eingetretenen Unterschied in der Luftfeuchtigkeit, Temperaturschwankungen etc.. Interessant ist ja nicht die tatsächliche Schwankung der jeweiligen Messwerte, sondern eine Beobachtung des Gesamtverlaufes. Zu berücksichtigen ist dabei, dass Veränderungen der Gasdurchlässigkeit aufgrund von Materialveränderungen, Langzeitprozesse sind, während die Witterung und auch die Luftdruckveränderungen im Verhältnis dazu kurzzeitige Änderungen darstellen.

Beispiele für solche Langzeitprozesse sind etwa das Zusetzen von Kapillargängen und Poren durch die Bildung von chemischen Verbindungen mit einem größeren Volumen als die Ausgangsverbindungen, wie etwa beim Alkali-, Sulfatoder Ettringittreiben, die wie ein "Verkleben der Porösität" wirken. Aber auch andere Materialveränderungen führen als Langzeitprozesse zu Veränderungen der Gasdurchlässigkeit.

Aus genau diesem Grunde ist das erfinderische Verfahren aber auch den herkömmlichen Methoden überlegen: Genau die Einflüsse, die bisher sehr störend waren und durch komplizierte zusätzliche Messungen, Ausgleichsrechnungen und dergleichen eliminiert oder berücksichtigt werden mussten, spielen jetzt praktisch keine Rolle mehr: Da die Messung kontinuierlich über einen längeren Zeitraum von mehreren Jahren erfolgen kann, muss nicht mehr berücksichtigt werden, ob die Messung etwa im Sommer oder Winter, bei niedrigen oder hohen Temperaturen, bei niedrigen oder hohen Luftfeuchtigkeiten stattgefunden hat. Es müssen stattdessen nur noch Werte verglichen werden, die beispielsweise vereinfacht ausgedrückt bei gleichartigen äußeren Bedingungen genommen wurden, die sich im Laufe des Vergleichszeitraumes auch in Abständen zufällig wiederholen. Da auch nur eingetretene Änderungen interessieren und beispielsweise zu Warnmeldungen führen sollen oder müssen, muss auch nur das Über- oder Unterschreiten bestimmter Grenzwerte erfasst werden oder auch das kontinuierliche Über- oder Unterschreiten bestimmter Schwellwerte für bestimmte Zeiträume.

Nach einer einmaligen Installation der erfindungsgemäßen Vorrichtung kann für einen beliebig langen Messzyklus die Veränderung der Gasdurchlässigkeit beobachtet werden. Damit wird also eine Online-Überwachung eines Bauwerkes in Bezug auf die Eigenschaft der Gasdurchlässigkeit möglich. Schädigungsprozesse lassen sich so außerordentlich frühzeitig erkennen

Der Luftdrucksensor, der den Luftdruck in der Umgebung feststellt, kann natürlich ein bereits vorhandener Sensor etwa aus einer Wetterstation sein; er kann sich auch durchaus in einer gewissen Entfernung von dem Baukörper befinden, sofern es noch möglich ist, rechnerisch auf den Luftdruck in unmittelbarer Nähe der Oberfläche des Baukörpers zu schließen. Zu bedenken ist ja, dass der atmosphärische Luftdruck auch höhenabhängig ist und für den Druckausgleich durch den porösen Baustoff hindurch der Luftdruck gerade außerhalb des Baukörpers interessiert.

Auch die Auswerteeinheit muss nicht am Baukörper angeordnet sein, sondern kann von diesem in einer erheblichen Entfernung vorgesehen werden. Dies ermöglicht es, zum Beispiel für ein größeres Bauwerk, etwa ein Kraftwerk oder auch einen Autobahnabschnitt mit mehreren Brücken, eine gemeinsame Überwachung einzurichten. Im Regelfall sind die Messergebnisse der Luftdrucksensoren ja erst dann relevant, wenn sie im Laufe der Messungen auf Abweichungen von einer bestimmten vorgegebenen Norm schließen lassen.

Die Datenverbindung der Auswerteeinheit mit den Luftdrucksensoren muss auch nicht zwangsläufig physikalisch erfolgen. In besonders einfach aufgebauten Ausführungsformen kann auch auf eine Datenfernübertragung verzichtet werden. Es wird dann eine Diskette oder ein anderer Datenträger mit den aufgezeichneten Druckdaten sozusagen manuell zur Auswerteeinheit transportiert, um eine (in diesem Fall nicht zeitgleiche, aber reproduzierbare) Datenverbindung herzustellen, wobei die Aufzeichnung der Druckdaten auf dem Datenträger den ersten Teil der Datenverbindung darstellt.

Zudem wird durch eine tiefengestaffelte Montage mehrerer Sensoren noch zusätzlich das Erstellen eines kontinuierlichen Tiefenprofils bezüglich der Gasdurchlässigkeit möglich. Selbst das Erkennen von Veränderungen in verschiedenen Teilen oder Schichten eines Bauwerkes werden dadurch möglich. Das Verfahren ist also für eine tiefenselektive Dichtigkeitsmessung und auch für eine zeitabhängige Beobachtung der Dichtigkeit des Baustoffes geeignet. Es lassen sich Aussagen über die Qualität und Dauerhaftigkeit sowie über die umgebungsbedingte Veränderung des Baustoffes erzielen.

Besonders einfach ist es natürlich möglich, gleich bei der Erstellung des Bauwerkes die entsprechenden Vorrichtungen vorzusehen, so dass das Verfahren dann permanent durchgeführt werden kann. Es ist aber auch für eine nachträgliche Installation in interessierenden Bauwerken geeignet.

Bei einer Ausführungsform des Verfahrens wird in dem Baukörper mittels einer Bohrung ein Hohlraum geschaffen und anschließend mit einem gasdichten Körper wieder verschlossen, beispielsweise mit einem Verschlusszylinder. Es entsteht so ein definierter Hohlraum im Baustoff. Der Innendruck in diesem Hohlraum wird mit dem Drucksensor gemessen. Durch die atmosphärische Druckveränderung bildet sich auch bei diesem Verfahren ein Differenzdruck zwischen Innendruck und atmosphärischem Luftdruck außerhalb des Hohlraums. Die Anpassungsgeschwindigkeit zwischen Innendruck und Außendruck wird wiederum ausgewertet und ist ein Maß für die Dichtigkeit des Baustoffes des Baukörpers.

Bei einer bevorzugten Ausführungsform wird die Bohrung durch einen Verschlusszylinder wiederum so ausgerüstet, dass der entstehende Hohlraum gegenüber dem atmosphärischen Außendruck getrennt ist. Der Verschlusszylinder besitzt eine Bohrung, die ihrerseits durch ein schraubenartiges Element verschlossen werden kann. Dieses schraubenartige Element kann an beiden Enden mit jeweils dem Luftdrucksensor für den Hohlraum beziehungsweise für den Außenraum versehen werden, so dass ein besonders einfacher Austausch sämtlicher Messinstrumente durch den einfachen Austausch dieses Elements möglich wird.

Im Folgenden wird die Erfindung anhand einiger Ausführungsbeispiele unter Bezugnahme auf die Zeichnungen näher erläutert. Es zeigen:
- **Figur 1**: einen schematischen Schnitt durch einen Baukörper mit einer Ausführungsform der erfindungsgemäßen Messvorrichtung;
- **Figur 2**: einen schematischen Schnitt durch einen Baukörper mit einer anderen Ausführungsform der erfindungsgemäßen Messvorrichtung;
- **Figur 3**: einen schematischen Schnitt durch einen Baukörper mit einer weiteren alternativen Ausführungsform der erfindungsgemäßen Messvorrichtung;
- **Figur 4**: einen schematischen Schnitt durch einen Baukörper während einer ersten Phase eines erfindungsgemäßen Verfahrens;
- **Figur 5**: einen schematischen Schnitt durch einen Baukörper während der zweiten Phase eines erfindungsgemäßen Verfahrens; und
- **Figur 6**: einen schematischen Schnitt durch einen Baukörper während der dritten Phase eines erfindungsgemäßen Verfahrens.

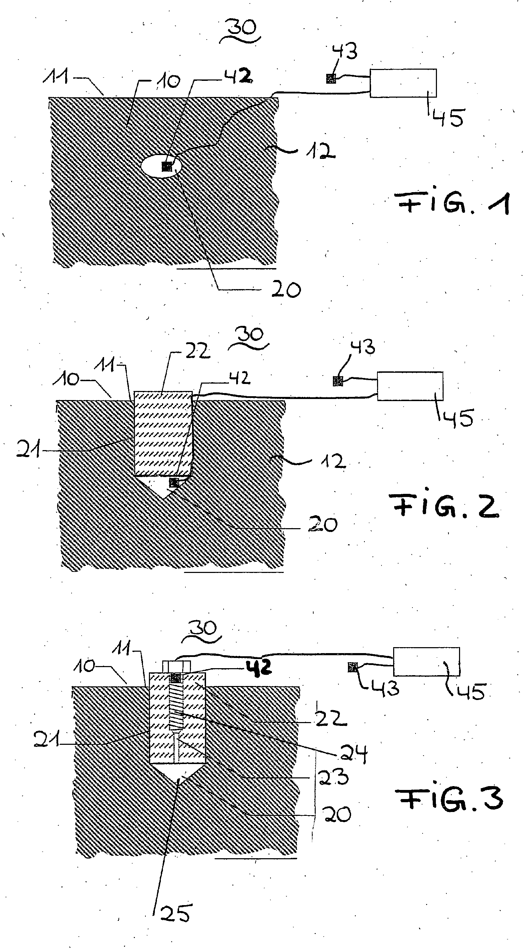

In der Figur 1 ist ein Baukörper 10 mit einer Oberfläche 11 dargestellt. Er besteht aus einem porösen Baustoff 12 und ist in der Figur 1 weggebrochen dargestellt, das heißt, er setzt sich außerhalb des Figurenbereiches fort. Der Baukörper kann zum Beispiel ein Gebäude oder Teil eines Gebäudes sein, beispielsweise einer Brücke, eines Hochhauses, eines Kraftwerkes, eines Tunnels oder anderer, für eine Überprüfung interessanter Baukörper 10.

Bei der Herstellung des Baukörpers 10 aus dem Baustoff 12 ist bereits ein abgeschlossener Hohlraum 20 ausgespart worden. Dieser Hohlraum 20 besitzt definierte Abmessungen und eine definierte Lage, insbesondere ein definiertes Volumen und einen definierten Abstand zur Oberfläche 11.

Außerhalb des Baukörpers 10 befindet sich in dem dargestellten Ausführungsbeispiel die äußere Umgebung 30, in welcher der Umgebungsluftdruck **P**_{**u**} herrscht. Der Luftdruck innerhalb des Hohlraumes sei als **P**_{**i**} bezeichnet.

Der Luftdruck **P**_{**i**} wird mittels eines Luftdrucksensors 42 im Inneren des Hohlraumes 20 bestimmt, der Luftdruck **P**_{**u**} in der Umgebung 30 wird durch einen Luftdrucksensor 43 gemessen. Die beiden Luftdrucksensoren 42 und 43 sind jeweils mit einer Auswertungseinheit 45 verbunden, der diese Messergebnisse **P**_{**i**} und **P**_{**u**} zugeführt werden und welche die Veränderungen auswertet. Die Auswertungseinheit 45 befindet sich im Regelfall außerhalb des Baukörpers 10, beispielsweise an diesem, oder aber auch an einem entfernt von dem Baukörper 10 liegenden Standort. Im letzteren Falle sind verschiedene Möglichkeiten denkbar, die Messwerte der Luftdrucksensoren 42 und 43 zur Auswertungseinheit 45 zu übertragen.

Bei einem absolut dichten Baustoff 12 würde der Innendruck **P**_{**i**} innerhalb des Hohlraumes 20 konstant sein, da keinerlei Austausch der in dem Hohlraum 20 befindlichen Gasmoleküle mit der äußeren Umgebung 30 stattfindet.

Ist der Baustoff jedoch porös, so erfolgt ein Austausch der Gasatome durch das Porensystem des Baustoffes 12 und der Innendruck **P**_{**i**} im Hohlraum 20 strebt einem Ausgleich mit dem atmosphärischen Außendruck **P**_{**i**} in der Umgebung 30 zu.

Je poröser der Baustoff ist, desto schneller erfolgt dieser Ausgleich. Ändert sich nun der atmosphärische Außendruck **P**_{**u**}, so folgt ihm der Innendruck **P**_{**i**} mit einer gewissen Verzögerung, die von der Porosität des Baustoffes 12 abhängt. Die entsprechenden Werte können in der Auswertungseinheit 45 miteinander verglichen und daraus entsprechende Folgerungen über die Porosität des Baustoffes 12 getroffen werden. Das Ergebnis der automatisch mit der Auswertungseinheit 45 ausgewerteten Druckausgleichsfunktion ist dann das Maß für die Dichtigkeit des Baukörpers 10.

In der **Figur 2** ist eine Ausführungsform dargestellt, bei der bei einem bereits bestehenden Baukörper 10 aus einem Baustoff 12 zunächst noch kein Hohlraum 20 vorgesehen war, dieser jedoch nachträglich eingebracht wird. Dies ist zum Beispiel dann erforderlich, wenn bei existierenden Brücken oder Tunneln nachträglich eine Online-Überwachung integriert werden soll.

Hier wird eine Bohrung 21 nachträglich von außen aus der Umgebung 30 durch den Baustoff 12 eingebracht und so ein Hohlraum 20 geschaffen. Dieser zunächst mit der Umgebung 30 in Kontakt stehende Hohlraum 20 wird von der Umgebung 30 durch einen Verschlusszylinder 22 wieder getrennt, so dass der verbleibende Hohlraum 20 wie im Beispiel aus der Figur 1 eine definierte Lage und ein definiertes Volumen besitzt. Der Hohlraum 20 befindet sich dann zwischen dem von der Umgebung 30 abgewandten Seite, also dem Fußpunkt des Verschlusszylinders 22 und dem äußersten Punkt der Bohrung 21.

Auch bei diesem Beispiel ist wiederum in dem so gebildeten Hohlraum 20 ein Luftdrucksensor 42 für den Innendruck **P**_{**i**} und außen in der Umgebung ein weiterer Luftdrucksensor 43 für den Umgebungsdruck **P**_{**u**} vorgesehen. Beide Luftdrucksensoren 42 und 43 stehen mit einer Auswertungseinheit 45 in Verbindung, wobei auch hier diese Verbindung eine Leitung oder aber auch eine Fernübertragungsmöglichkeit sein kann.

Das Ausführungsbeispiel der **Figur 3** zeigt ebenfalls einen Hohlraum 20 in einem Baukörper 10, wobei dieser Hohlraum 20 nachträglich durch eine Bohrung 21 erstellt wird. Auch hier ist ein Verschlusszylinder 22 vorgesehen, der dann den Hohlraum 20 von der Umgebung 30 abtrennt. Im Gegensatz zur Ausführungsform der Figur 2 befindet sich jedoch ein Luftkanal 23 zentrisch im Verschlusszylinder 22.

Durch diesen Luftkanal 23 wird es möglich, den Luftdrucksensor 42 für den Innendruck **P**_{**i**} im Hohlraum 20 auch nach Einbringen des Verschlusszylinders 22 noch nachträglich zu installieren und auch wieder zu entfernen, etwa zu Reparatur-, Wartungs- oder Austauschzwecken. Der Luftkanal 23 wird durch eine geeignete Schraube 24 verschlossen, um eine Beeinflussung der inneren Oberfläche des Hohlraumes 20 durch äußere Einflüsse zu verhindern.

Mit einer derartigen Maßnahme wird es möglich, nicht nur in beliebigen Zeitabständen die Veränderung an ein und demselben Messpunkt zu kontrollieren und Veränderungen zu erkennen, sondern außerdem den Sensor 42 für Kalibrierungen zu entfernen oder auch das Messvolumen im Hohlraum 20 unterhalb des Verschlusszylinders 22 mittels einer kurzzeitigen Druckausgleichsmessung nach den allgemeinen Gasgesetzen zu kontrollieren.

Die dargestellten Verfahren sind nicht nur für Beton, sondern auch für Baustoffe 12 aus Naturstein und anderen Materialien geeignet. Sie ermöglichen in nicht dargestellten Ausführungsformen auch tiefenselektive Dichtigkeitsmessungen.

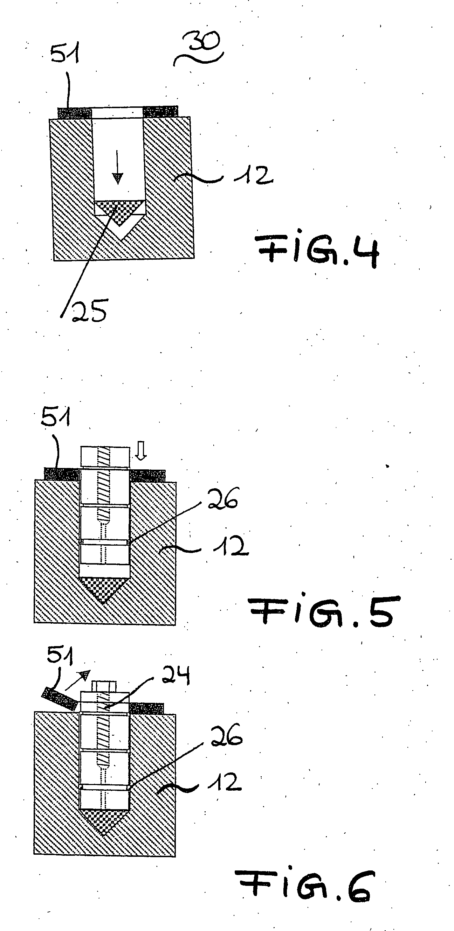

In den **Figuren 4 bis 6** sind drei Phasen eines erfindungsgemäßen Verfahrens beispielhaft dargestellt.

In der Figur 4 ist zunächst wiederum ein Baukörper 10 aus einem Baustoff 12 gezeigt. Durch die Oberfläche 11 wird aus der Umgebung 30 eine Bohrung 21 in den Baukörper 10 eingebracht. Außen auf der Oberfläche 11 wird ein Kunststoffoder Metallring 51 um den Rand der Bohrung 21 herum aufgelegt und dort provisorisch fixiert. Der Ring 51 ist dazu geeignet, die Oberfläche 11 des Baukörpers 10 zu schützen gegen Klebstoff, der in weiteren, noch zu erörternden Verfahrensschritten eingesetzt wird und ggf. zu einer Abdichtung und/oder Verschmutzung der Oberfläche 11 beitragen könnte, die eine Verfälschung der Messergebnisse für das Gesamtbauwerk mit dem Baukörper 10 bewirken könnte.

In die Bohrung 21 wird ein Fußkegel 25 zur Verringerung des bei der Bohrung 21 entstandenen Ausgleichsvolumens im späteren Hohlraum 20 eingesetzt.

Ein Verschlusszylinder 22 mit einem Luftkanal 23 zunächst testweise in die Bohrung 21 eingeschoben. Danach wird durch Justiernuten, gegebenenfalls Justierscheiben und entsprechende Messungen und Tests die Tiefe des Verschlusszylinders 22 sorgfältig bestimmt und dieser anschließend wieder herausgezogen.

Danach wird der Verschlusszylinder 22 bis zu einem Dichtring 26 in die Bohrung 21 eingesetzt und oberhalb des Dichtringes 26 satt Epoxid-Kleber aufgetragen. Dann wird der Verschlusszylinder 22 langsam in die Bohrung 21 eingeschoben, wobei der Luftkanal 23 nicht verschlossen ist, so dass keine Störung des Einschiebens eintritt.

Wenn der Verschlusszylinder 22 am Fußpunkt aufliegt, wird der Luftkanal 23 mit einer Schraube 24 verschlossen.

Der Klebkragen mit überschüssigem Epoxid wird vor dem Aushärten des Klebers vorsichtig entfernt, so dass die Oberfläche 11 des Baustoffes 12 nicht verschmutzt oder mit Klebstoff benetzt wird. Der Klebkragen ist zugleich der erwähnte Kunststoff- oder Metallring 51, der jetzt nicht mehr benötigt wird.

Der Klebstoff im übrigen hält jetzt den Verschlusszylinder 22 in der Bohrung 21 fest. Nach Aushärten des Klebstoffes wird die Schraube 24 herausgedreht und der Luftdrucksensor 42 durch den Luftkanal 23 in den entstandenen Hohlraum 20 eingeführt. Diese Einführung erfolgt langsam, um eine Ausbildung von Überdruck im Testvolumen möglichst zu vermeiden.

Nach Durchführung dieses Verfahrens und Aufbau der nicht dargestellten Elemente (zweiter Luftdrucksensor 43 und Auswerteeinheit 45) kann das Verfahren in der Praxis durchgeführt werden.

### Bezugszeichenliste

- 10: Baukörper
- 11: Oberfläche
- 12: poröser Baustoff

- 20: Hohlraum
- 21: Bohrung
- 22: Verschlusszylinder
- 23: Luftkanal
- 24: Schraube
- 25: Fußkegel
- 26: Dichtungsring

- 30: Umgebung

- 42: Luftdrucksensor
- 43: Luftdrucksensor
- 45: Auswerteeinheit

- 51: Kunststoff- oder Metallring

## Patentansprüche

1. Anordnung zur Messung der Gasdurchlässigkeit eines porösen Baustoffes (12) in einem Baukörper (10) mit einer Oberfläche (11), die den porösen Baustoff (12) von der Umgebung (30) abgrenzt,
**dadurch gekennzeichnet,**
**dass** ein abgeschlossener Hohlraum (20) im Inneren des Baukörpers (10) mit Abstand zur Oberfläche (11) des Baustoffes (12) vorgesehen ist,
**dass** ein Luftdrucksensor (42) in dem Hohlraum (20) angeordnet ist,
**dass** ein Luftdrucksensor (43) in der Umgebung (30) außerhalb des Baukörpers (10) angeordnet ist, und
**dass** eine Auswerteeinheit (45) vorgesehen ist, die eine mindestens zeitweise Datenverbindung mit den beiden Luftdrucksensoren (42, 43) aufweist.

2. Anordnung nach Anspruch 1,
**dadurch gekennzeichnet,**
**dass** zwischen dem Hohlraum (20) und der Oberfläche (11), die den porösen Baustoff (12) von der Umgebung (30) abgrenzt, eine Bohrung (21) vorgesehen ist, die durch einen Verschlusszylinder (22) aus luftdichtem Material verschlossen ist.

3. Anordnung nach Anspruch 2,
**dadurch gekennzeichnet,**
**dass** in dem Verschlusszylinder (22) ein Luftkanal (23) vorgesehen ist, der verschließbar ist.

4. Anordnung nach Anspruch 3,
**dadurch gekennzeichnet;**
**dass** der Luftkanal (23) durch ein Element enthaltend den Luftdrucksensor (42) für den Hohlraum (20) auf der einen Seite und den Luftdrucksensor (43) für den Luftdruck in der Umgebung (30) auf der anderen Seite verschließbar ist.

5. Anordnung nach einem der vorstehenden Ansprüche,
**dadurch gekennzeichnet,**
**dass** mehrere Hohlräume (20) in unterschiedlichen Abständen von der Oberfläche (11) des Baukörpers (10) angeordnet sind, und
**dass** in jedem der Hohlräume (20) im Inneren des Baukörpers (10) jeweils ein Luftdrucksensor (42) angeordnet ist, der jeweils mindestens zeitweise in Datenverbindung mit der Auswerteeinheit (45) steht.

6. Verfahren zur Messung der Gasdurchlässigkeit eines porösen Baustoffes (12) in einem Baukörper (10) mit einer Oberfläche (11), die den porösen Baustoff (12) von der Umgebung (30) abgrenzt,
**dadurch gekennzeichnet,**
**dass** im Inneren des Baukörpers (10) ein abgeschlossener Hohlraum (20) ausgebildet wird, der gegenüber der Umgebung (30) abgeschlossen wird,
**dass** in dem Hohlraum (20) der Luftdruck gemessen wird,
**dass** in der Umgebung (30) der Luftdruck gemessen wird,
**dass** die Messeserie für den Luftdruck im Hohlraum (20) und in der Umgebung (30) kontinuierlich oder in diskreten Zeitabständen an eine Auswerteeinheit (45) gegeben werden, und
**dass** die Auswerteeinheit (45) aus den veränderlichen Luftdruckwerten in der Umgebung (30) und den davon abhängig veränderlichen Luftdruckwerten im Hohlraum (20) auf die Gasdurchlässigkeit des porösen Baustoffes (12) schließt.

7. Verfahren nach Anspruch 6,
**dadurch gekennzeichnet,**
**dass** die Messung des Luftdruckes durch die Luftdrucksensoren (42, 43) und die Auswertung in der Auswerteeinheit (45) kontinuierlich durchgeführt wird.
